# EUROPEAN PATENT APPLICATION

(11) **EP 0 977 334 A2**
(43) Date of publication of application: **02.02.2000**
(21) Application number: 99305967.4
(22) Date of filing: 27.07.1999
(51) Int. Cl.: H02G 3/04

(54) **Duct assembly**

(30) Priority: 30.07.1998 GB 9816471
(71) Applicant: Polysleeve Products Limited, Groby, Leicester LE6 0GN (GB)
(72) Inventor: Barker, John Arthur, Polysleeve Products Ltd., Leicester, LE6 0GN (GB)
(74) Representative: Harrison Goddard Foote

(57) **Abstract**

A duct assembly, comprising an externally grooved, plastics sleeve and at least one sleeve end arrangement, which arrangement includes a part annular collar having an internal groove engaging portion and, engageable with said collar, an end cap, said end cap being provided with an aperture which at least partially faces in a direction away from the longitudinal axis of said end cap.

## Description

### FIELD OF THE INVENTION

This invention relates to end caps for use with duct assemblies and more particularly, for use with assemblies that provide a duct extending through a wall or partition and within which may extend a pipe or cable.

### STATEMENTS OF INVENTION

According to the present invention there is provided a duct assembly, comprising an externally grooved, plastics sleeve and at least one sleeve end arrangement, which arrangement includes a part annular collar having an internal groove engaging portion and, engageable with said collar, an end cap, said end cap being provided with an aperture which at least partially faces in a direction away from the longitudinal axis of said end cap.

The present invention also provides an isolated end cap and component parts thereof.

The present invention also provides a method of installing a wall or partition traversing duct for a cable or pipe, the method comprising providing a length of externally grooved plastics sleeve in a wall or partition traversing location, mounting a part annular collar, having a groove engaging portion, on the sleeve where it emerges from one side of the wall or partition, severing the sleeve flush to said collar and mounting an annular end cap on said collar, said collar and said end cap being engageable with each other, and said end cap being provided with an aperture which at least partially faces in a direction away from the longitudinal axis of said end cap.

Accordingly, the invention provides a very simple duct assembly, and method for its installation, which typically comprises only five components, namely, a sleeve and, for each end of the duct, a part annular collar, or circlip, and an end cap.

Preferably, the end cap is provided with at least one aperture suitably adapted so as to allow passage of a pipe or cable.

Preferably, associated with the aperture of the end cap there is provided a guide means. Ideally the guide means may project a selected distance from the periphery of the end cap and/or may be provided as a grooved/shaped region extending radially and inwardly from a rim portion of the end cap . Said guide means may be provided integrally or as a separate component that can be fixedly attached to the end cap.

Preferably, the end cap is circular and dome shaped. Alternatively it may take the form of a circular member that is provided with a region that is relatively flat at the periphery and is dome shaped at a region around the centre.

Preferably, the end cap is made of plastics material by a moulding, machining or other suitable operation.

Preferably the end cap and the part annular collar are engageable by means of a snap fit connection therebetween. This snap fit connection may be achieved by, for instancc, engagement between an integral, axially extending and peripherally grooved extension of said collar with an integral, internal peripheral flange providing on the end cap.

### DESCRIPTION OF SPECIFIC EMBODIMENT

The present invention will now be described, by way of example only, and with reference to the accompanying drawings, in which:-
Figure 1 represents a front view of a duct assembly in accordance with the present invention with an end cap as depicted in Figure 5;
Figure 2 shows a perspective view of an end cap in accordance with the present invention, for use with a duct assembly;
Figure 3 is a perspective view of an alternative embodiment of Figure 1;
Figure 4 is a perspective view of the under-side of the end cap of Figure 3; and
Figure 5 is a perspective view of an alternative embodiment Figure 2.

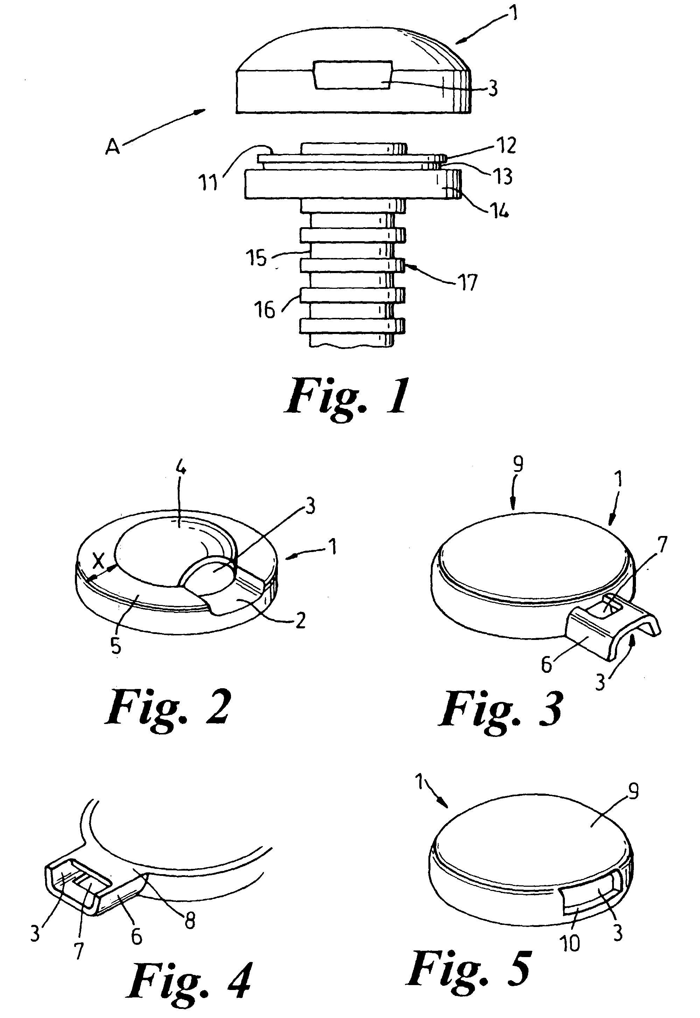

With reference to Figure 1 there is shown a front view of a duct assembly in accordance with the present invention. The duct assembly A comprises a plastic sleeve 17 having grooves 15 spaced apart by radially extending circumferential projections 16. In order to install the sleeve 1 firmly in position within a wall or partition the assembly further comprises a part annular collar 14 with a groove 13 and flange 12 and aperture 11 for snap fit engagement with end cap 1. End cap 1 being provided with an aperture 3 for accommodating a cable or wire or conduit. Thus in use and in assembled form the end cap provides discrete and attractive concealment of the said cable or wire or conduit.

Referring to the accompanying drawings, and to Figure 2, there is shown end cap 1 in accordance with the present invention. End cap 1 is provided, at its edge with a small, inwardly directed flange or shaped/grooved section 2 which defines an aperture 3. Additionally end cap 1 is provided with a relatively flat region 5 which extends a distance X from the end cap periphery perimeter towards the centre. The end cap is dome shaped at region 4. It will be appreciated that the distance X and the height of the dome region 4 can be varied according to a user's requirements.

In use, one of the assembly components, the part annular collar or circlip (not shown), is provided with an integral projection. Said integral projection extends longitudinally from the main body of the circlip, and is provided with an externally grooved portion and whose maximum diameter, adjacent said grooved portion, is slightly less than the maximum diameter of the main body. The diameter at this point is slightly less than the diameter of the aperture 3 defined by flange 2 of end cap 1. Due to the nature of the materials of end cap 1 and the circlip (typically hard but slightly resilient plastics material), the end cap 1 may be pushed into engagement with the circlip by a snap-fit connection.

With the end cap 1 in place, the only item seen from the exterior of the wall or partition is the external surface of the end cap which provides a neat and pleasing appearance.

With reference to Figure 3 there is shown an alternative embodiment of the end cap 1 in accordance with the present invention. In this particular embodiment, end cap 1 is provided as a dome shaped member over the entire upper region 9. Furthermore, in this embodiment there is provided an externally projecting pipe/cable guide means 6. The walls of the guide means being an inverted U shape in cross section. Additionally provided in an upper surface of the guide means 6 is an opening 7 which is provided to allow observation of the conduit(s) held therein. As will be apparent from Figure 4, which shows an under-side view of Figure 3, the walls of guide means 6 are continuos along three sides. Approximately mid-way along the length that the guide means projects from the periphery perimeter of the end cap, there is provided a fourth wall 8 so that the guide means effectively forms a hollow square for at least a part of its length. Thus the conduit, typically a pipe or cable is held away from a part of the wall surface.

Finally, with reference to Figure 5 there is shown a further embodiment of an end cap 1 in accordance with the present invention. In this particular embodiment of the invention end cap 1 is dome shaped at its upper region 9 and aperture 3 is provided with an internally protruding guide means 10.

Thus it will be appreciated from the foregoing that the end cap of the present invention can be provided as dome shaped or partially dome shaped and can be provided with an internally or externally projecting guide means. The combination of which can be selected according to a user's requirements. Moreover the end cap of the present invention provides a component for use with duct assemblies that improves the external appearance of the assembly and concomitantly improves safety by enclosing conduits such as pipes and cables as they exit/enter walls or the like.

## Claims

1. A duct assembly, comprising an externally grooved, plastics sleeve and at least one sleeve end arrangement, which arrangement includes a part annular collar having an internal groove engaging portion and, engageable with said collar, an end cap, said end cap being provided with an aperture which at least partially faces in a direction away from the longitudinal axis of said end cap.

2. A duct assembly according to Claim 1 wherein the end cap is provided with at least one aperture suitably adapted so as to allow passage of a pipe or cable.

3. A duct assembly according to either preceding claim wherein associated with the aperture of the end cap there is provided a guide means.

4. A duct assembly according to Claim 3 wherein the guide means projects a selected distance from the periphery of the end cap.

5. A duct assembly according to Claim 3 wherein the guide means is provided as a grooved/shaped region extending radially and inwardly from a rim portion of the end cap .

6. A duct assembly according to any of Claims 3-5 wherein the guide means is provided integrally or as a separate component that can be fixedly attached to the end cap.

7. A duct assembly according to any preceding claim wherein the end cap is circular and dome shaped.

8. A duct assembly according to any of Claims 1-7 wherein the end cap comprises a circular member that is provided with a region that is relatively flat at the periphery and is dome shaped at a region around the centre.

9. A duct assembly according to any preceding claim wherein the end cap is made of plastics material by moulding, machining or other suitable operation.

10. A duct assembly according to any preceding claim wherein the end cap and the part annular collar are engageable by means of a snap fit connection therebetween.

11. A duct assembly according to Claim 10 wherein the snap fit connection is achieved by engagement between an integral, axially extending and peripherally grooved extension of said collar with an integral, internal peripheral flange providing on the end cap.

12. A method of installing a wall or partition traversing duct for a cable or pipe, the method comprising providing a length of externally grooved plastics sleeve in a wall or partition traversing location, mounting a part annular collar, having a groove engaging portion, on the sleeve where it emerges from one side of the wall or partition, severing the sleeve flush to said collar and mounting an annular end cap on said collar, said collar and said end cap being engageable with each other, and said end cap being provided with an aperture which at least partially faces in a direction away from the longitudinal axis of said end cap.

13. A method according to Claim 12 further including any of the preferred features of Claims 2-11.
